# EUROPÄISCHE PATENTSCHRIFT

(11) **EP 2 376 307 B1**
(45) Veröffentlichungstag und Bekanntmachung des Hinweises auf die Patenterteilung: **15.01.2014**
(21) Anmeldenummer: 09760522.4
(22) Anmeldetag: 25.11.2009
(51) Int. Cl.: B60L 7/24, B60L 7/26, F02D 11/10

(54) **VERFAHREN UND VORRICHTUNG ZUR STEUERUNG EINES ANTRIEBSTRANGS**
METHOD AND DEVICE FOR CONTROLLING A DRIVE TRAIN
PROCÉDÉ ET DISPOSITIF POUR COMMANDER UNE CHAÎNE CINÉMATIQUE

(30) Priorität: 09.12.2008 DE 102008054424
(43) Veröffentlichungstag der Anmeldung: 19.10.2011
(73) Patentinhaber: Robert Bosch GmbH, 70442 Stuttgart (DE)
(72) Erfinder: HEYL, Andreas, 71640 Ludwigsburg (DE)
(86) Internationale Anmeldenummer: PCT/EP2009/065824
(87) Internationale Veröffentlichungsnummer: WO 2010/066581

(56) Entgegenhaltungen:
- EP-A1- 0 939 300
- EP-A2- 0 900 711
- DE-A1- 4 416 908
- JP-A- 57 186 902
- JP-A- 63 011 434
- JP-A- 2006 027 545
- KR-A- 20030 037 637
- US-A- 5 650 700

## Beschreibung

### Stand der Technik

Die Erfindung betrifft ein Verfahren und eine Vorrichtung zur Steuerung eines Antriebsstrangs gemäß den Oberbegriffen der unabhängigen Patentansprüche. Ein derartiges Verfahren bzw. eine derartige Vorrichtung ist aus der DE 198 51 457 bekannt Dort wird ein Verfahren und eine Vorrichtung zur Steuerung des Drehmoments einer Antriebseinheit vorgeschlagen. Wenigstens auf der Basis der Stellung eines vom Fahrer betätigbaren Bedienelements wird ein Sollwert für einen Drehmoment der Antriebseinheit gebildet. Ferner wird ein Istwert für das Drehmoment erfasst und in Abhängigkeit des Sollwerts wenigstens eine Steuergröße für das Drehmoment der Antriebseinheit gebildet. Abhängig von der Abweichung des Sollwerts und des Istwerts wird ein Signal erzeugt, durch welches die Steuergröße reduziert wird, wenn der Istwert den Sollwert übersteigt.

In der Richtlinie ECE R100 für batteriebetriebene Elektrofahrzeuge wird gefordert, dass ein Fehler (z.B. im Motorsteuergerät) bei einem stehenden, ungebremsten Fahrzeug zu keiner Bewegung > 10cm führen darf. (Vgl.Abschnitt 5.2.2.3: Die unbeabsichtigte Beschleunigung, Verzögerung und Umsteuerung des Antriebssystems müssen ausgeschlossen sein. Insbesondere darf eine Störung (zum Beispiel im Antriebsnetz) nicht dazu führen, dass sich ein stehendes ungebremstes Fahrzeug um mehr als 0,1 m fortbewegt.)

Elektromotoren werden auf ungewolltes Drehmoment überwacht. Sobald ein Fehler festgestellt wird, geht der Elektromotor in seinen sicheren Zustand, in dem er kein positives Moment mehr stellen kann. Für die Verhinderung einer ungewollten Bewegung sind sehr kurze Fehlerreaktionszeiten notwendig. Diese sind schwer zu realisieren führen zu einer Reduzierung der Verfügbarkeit. Bekannte Konzepte arbeiten mit Fehlerzeiten von 500ms. Elektromotoren stellen jedoch schon bei niedrigen Drehzahlen ihr Maximalmoment, so dass ein entsprechender Fehler je nach Fahrzeug zu einer Bewegung von mehreren Metern führen kann. Eine Reduzierung der Fehlerzeiten ist möglich, stößt jedoch z.T. an technische Grenzen. Ein bekanntes Konzept baut auf einer Überwachung des Funktionsrechners durch ein Überwachungsmodul auf, bei dem zwischen diesen Bauteilen eine Frage-Antwort-Kommunikation durchgeführt wird. Die Zeit zwischen einer Frage und einer Antwort kann aufgrund der Sequenzierung der SW-Module im Funktionsrechner (oft >10ms) nicht weiter reduziert werden. Selbst wenn die Zeiten reduziert werden, kann das negative Folgen für die Verfügbarkeit des Systems haben, da Fehler weniger lange entprellt werden und schneller zu einem Abschalten führen. Auch mit kurzen Fehlerreaktionszeiten ist bei abschüssiger Straße bei einem ungebremsten Fahrzeug nach einem "Drehmomentenstoß" ein Rollen größer 10 cm wahrscheinlich.

Die JP 63011434 beschreibt ein Verfahren, bei dessen Ausführung eine Drehzahl eines Vorderrads mit einem Referenzwert verglichen wird. Sofern die Drehzahl des Vorderrads kleiner als der Referenzwert ist, wird ein entsprechendes Signal erzeugt.

In der EP 0 900 711 A2 wird ein Steuergerät für die elektrische Leistung eines Motors beschrieben. Das Steuergerät soll so ausgelegt sein, dass bei einer Fahrzeuggeschwindigkeit unter einem vorgegebenen Wert ein von dem Steuergerät ausgeführter Vorgang automatisch abgebrochen wird.

### Offenbarung der Erfindung

Die Erfindung schafft ein Verfahren zur Steuerung eines Antriebsstrangs mit wenigstens einem Antriebsaggregat mit den Merkmalen des Patentanspruchs 1 und eine Vorrichtung zur Steuerung eines Antriebsstrangs mit wenigstens einem Antriebsaggregat mit den Merkmalen des Patentanspruchs 7.

Technischer Hintergrund ist, dass eine Abweichung der Sollfunktionalität des Antriebsaggregates erkannt werden kann und als Reaktion darauf das erste Signal erzeugt wird. Dieses erste Signal dient selbst oder als Auslöser für das Umsetzen von Maßnahmen, die einen sicheren Betrieb des Antriebsstrangs gewährleisten. Unter einem sicheren Betrieb des Antriebsstrangs wird hierbei verstanden, dass insbesondere die Wirkungen des Antriebsstrangs nach außen, also z. B. das wirkende Drehmoment an den Antriebsrädern entweder der Sollfunktionalität entsprechen, oder aber in einen betriebssicheren Zustand überführt werden.

Bereits bei einer geringeren Abweichung der Sollfunktionalität des Antriebsaggregates wird das erste Signal erzeugt, welches einen sicheren Betrieb des Antriebsstranges gewährleistet. Vorteilhaft kann so in Situationen, in denen bereits eine geringe Abweichung der Sollfunktionalität des Antriebsstrangs zu unerwünschten Auswirkungen führt, ein rascheres Eingreifen des Verfahrens und der Vorrichtung erfolgen und ein sicherer Betrieb des Antriebsstrangs gewährleistet werden. So wird bei Stillstand des Fahrzeugs bei Erkennen eines ungewollten Drehmoments eine Fehlerreaktion ausgelöst. Die Überwachung wechselt bei Stillstand des Fahrzeugs in den sensibleren Modus, mit kürzeren Fehlertoleranzzeiten und engeren Momentengrenzen. Bei Erkennung eines Fehlers wird eine Bremsfunktion aktiviert, z.B. ein aktives Bremsen über eine elektrische Bremse oder über Aktivierung einer Getriebesperre oder ein Bremsen über ein Doppelkupplungsgetriebe durch Schließen beider Kupplungen. In diesem Zustand besteht keine Gefährdung durch ungewollte Bewegung mehr.

Die Bremsvorrichtung wirkt einem Drehmoment des wenigstens einen Antriebsaggregates des Antriebsstrangs entgegenwirken. Vorteilhaft wird so der Antriebsstrang in einen sicheren Zustand überführt. So wird nicht allein das Drehmoment des Antriebsaggregates zurückgenommen, sondern das Fahrzeug wird durch andere Systeme aktiv gebremst. Somit wird ein Weiterrollen des Fahrzeugs durch insbesondere Trägheit des Fahrzeugs und/oder gespeicherte Energie im Antriebstrang (z.B. Wandler bei Automat-Getrieben), verhindert.

Eine Weiterbildung der Erfindung ist dadurch gekennzeichnet, dass während der aktivierten Bremsfunktion ein Sollwert für ein Drehmoment eines

Antriebsaggregates vorgebbar ist und ein Istwert des Drehmomentes erfasst wird. Wenn die Abweichung des Istwertes vom Sollwert kleiner als der Betrag des Abweichungswerts ist und/oder die Abweichung des Istwertes vom Sollwert kürzer als der vorgebbarer Betrag der Abweichungszeitdauer andauert, wird ein zweites Signal erzeugt. Dieses Signal deaktiviert die Bremsfunktion. Wenn dagegen die Abweichung des Istwertes vom Sollwert größer als ein vorgebbarer Betrag des Abweichungswerts ist und/oder die Abweichung des Istwertes vom Sollwert länger als ein der Betrag der Abweichungszeitdauer andauert, so wird ein drittes Signal erzeugt. Dieses stellt sicher, dass das Antriebsaggregat kein Drehmoment mehr abgibt. Technischer Hintergrund ist, dass nach der Aktivierung der Bremsvorrichtung die Sollfunktionalität des Antriebsaggrgates nochmals überprüft wird. Ist die Abweichung des Istwertes vom Sollwert des Drehmomentes des Antriebsaggregates kleiner als ein vorgebbarer Betrag des Abweichungswerts und/oder die Abweichung des Istwertes vom Sollwert kürzer als ein vorgebbarer Betrag der Abweichungszeitdauer, so wird die Bremsfunktion deaktiviert. Das bedeutet, dass keine signifikante Abweichung des Istwertes des Drehmomentes des Antriebsaggregates vom Sollwert mehr vorliegt. Die Sollfunktionalität des Antriebsaggregates ist wiedergegeben, somit ist insbesondere der Antriebsstrang wieder steuerbar. Aufgrund dessen wird die Bremsfunktion deaktiviert und der Antriebsstrang wieder normal angesteuert. Andererseits, wenn nach Aktivierung der Bremsfunktion dennoch die Abweichung des Istwertes vom Sollwert größer als ein vorgebbarer Betrag des Abweichungswertes ist und/oder die Abweichung des Istwertes vom Sollwert länger als ein vorgebbarer Betrag der Abweichungszeitdauer andauert, so wird ein drittes Signal erzeugt. Dieses Signal stellt sicher, dass das Antriebsaggregat kein Drehmoment mehr abgibt. Dies kann insbesondere dadurch realisiert werden, dass beispielsweise die Energiezufuhr zum Antriebsaggregat unterbrochen wird, indem z. B. die elektrische Energieversorgung des Antriebsaggregates dauerhaft getrennt wird, die Kraftstoffzufuhr gestoppt wird, keine Spannung mehr am Antriebsaggregat anliegt und/oder keine Pulswechselrichter Signale mehr abgegeben werden. Alternativ kann das Antriebsaggregat aktiv abgebremst werden oder die Antriebsräder werden mechanisch durch Öffnen einer Kupplung oder Auslegen eines Ganges des Getriebes vom Antriebsstrang getrennt.

Durch diese Funktionalität wird vorteilhaft die Möglichkeit geschaffen, die Fehlfunktionalität in einem betriebssicheren Zustand des Antriebsstrangs ein weiteres Mal zu überprüfen. Liegt die Fehlfunktionalität nicht mehr vor, so wird die Bremsfunktion deaktiviert und der Antriebsstrang wieder normal angesteuert. Liegt die Fehlfunktionalität weiter vor, so wird das Antriebsaggregat in einen Zustand überführt, in dem es kein Drehmoment mehr abgeben kann. Statt den Elektromotor irreversibel (bis zum nächsten Zündung Aus - Ein-Vorgang) abzustellen, wird bei sicher blockiertem Antriebstrang vom Steuergerät geprüft, ob der momentenrelevante Fehler weiter besteht. Falls nicht, kann ein sofortiger Wiederstart, insbesondere nach Meldung an den Fahrer, erlaubt werden. Damit kann die Anzahl der irreversiblen Absteller reduziert und die Verfügbarkeit erhöht werden.

Eine Weiterbildung der Erfindung sieht vor, dass während der aktivierten Bremsfunktion eine Warnmeldung ausgegeben wird und ein Mittel zur Deaktivierung der Bremsfunktion vorgesehen ist, welches ein zweites Signal erzeugen kann. Dieses zweite Signal deaktiviert die Bremsfunktion. Technischer Hintergrund dieser Ausgestaltung ist, dass einem Bediener die Möglichkeit gegeben wird, das Verfahren zu beeinflussen. Dementsprechend wird bei aktivierter Bremsvorrichtung eine Warnmeldung ausgegeben, die den Bediener auf die Fehlfunktionalität und eventuell auf die sich darauf ergebenden Gefahren hinweist. Für den Fall, dass der Bediener den Antriebsstrang weiter ansteuern möchte, ist ein Mittel vorgesehen, mit dem er aktiv die Bremsfunktion deaktivieren kann. Insbesondere wird durch Betätigung des Mittels ein zweites Signal erzeugt, welches die Bremsfunktion deaktiviert. Vorteilhaft wird so eine Möglichkeit geschaffen, die automatische Funktion der Steuerung zu übersteuern. Statt den Elektromotor abzustellen, wird eine Warnung an den Fahrer gegeben, dass bei Deaktivierung der Bremse (z.B. über kurze Betätigung des Gaspedals) eine Bewegung erfolgen kann. Damit wird die Kontrollierbarkeit des Fehlers durch den Fahrer erhöht. Bei Deaktivierung der Bremse (z.B. über Betätigung des Gaspedals) wechselt das System aus dem Standbetrieb in einen ungebremsten Fahrbetrieb. Ein sofortiger Wiederstart kann erlaubt werden. In Folge kann damit die Anzahl der irreversiblen Absteller reduziert und die Verfügbarkeit erhöht werden.

Eine Weiterbildung der Erfindung sieht vor, dass das erste Signal eine elektrische Bremse, eine Getriebesperre und/oder beide Kupplungen eines Kupplungsgetriebes als die wenigstens eine Bremsvorrichtung des Antriebsstrangs aktiviert. Technischer Hintergrund dieser Weiterbildung ist, dass unterschiedliche Bremsvorrichtungen verwendet werden können, um eine bremsende Wirkung zu erzielen, die dem Drehmoment des Antriebsaggregates entgegenwirkt. Vorteilhaft sind unterschiedliche Bremsvorrichtungen verwendbar, um die Bremsfunktionalität zu erzielen.

Eine Weiterbildung der Erfindung ist dadurch gekennzeichnet, dass die Warnmeldung über den vorliegenden Defekt und die sich daraus ergebenden Gefährdungen informiert. Technischer Hintergrund und Vorteil dieser Weiterbildung sind, dass dem Bediener klar mitgeteilt wird, welcher Defekt vorliegt und welche Gefährdungen sich darauf ergeben können. In einem technischen System können sehr unterschiedliche Fehler mit sehr unterschiedlichen Ursachen und Auswirkungen auftreten. Es wird so die Möglichkeit geschaffen, dass der Bediener in Abhängigkeit dieser Informationen entscheiden kann, ob er die automatische Steuerung des Antriebsstrangs aktiv übersteuern möchte oder beibehalten will.

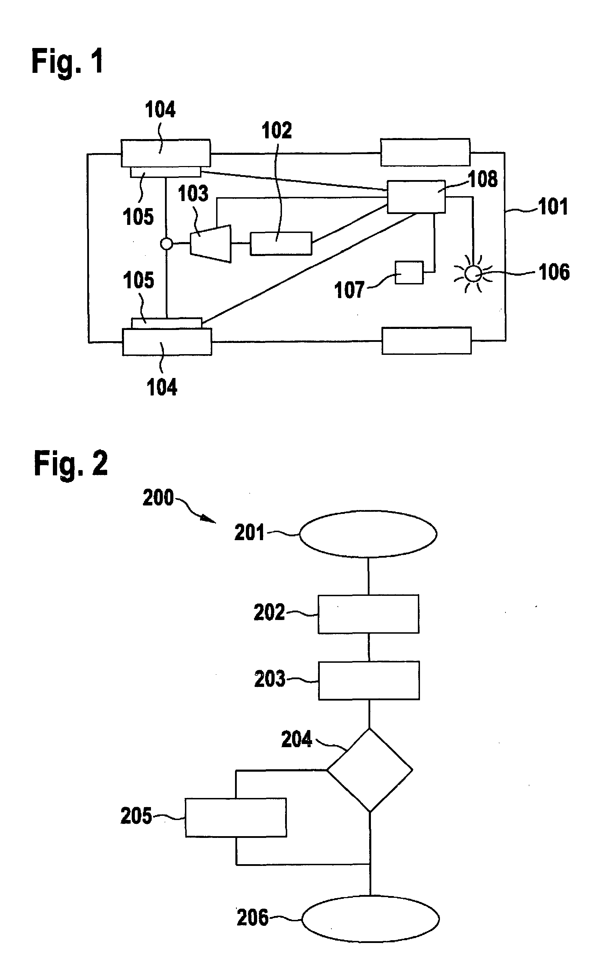

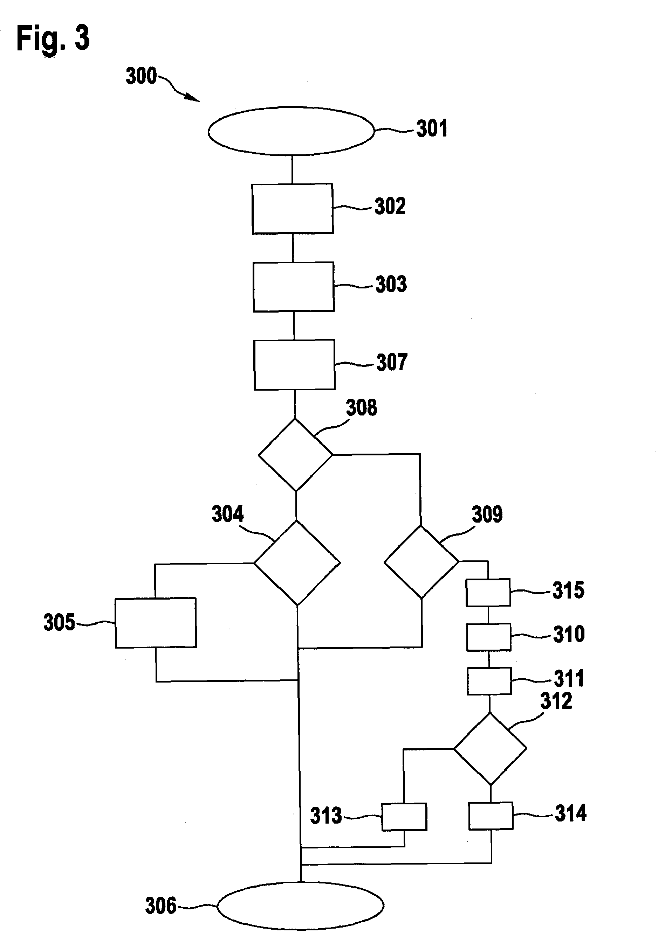

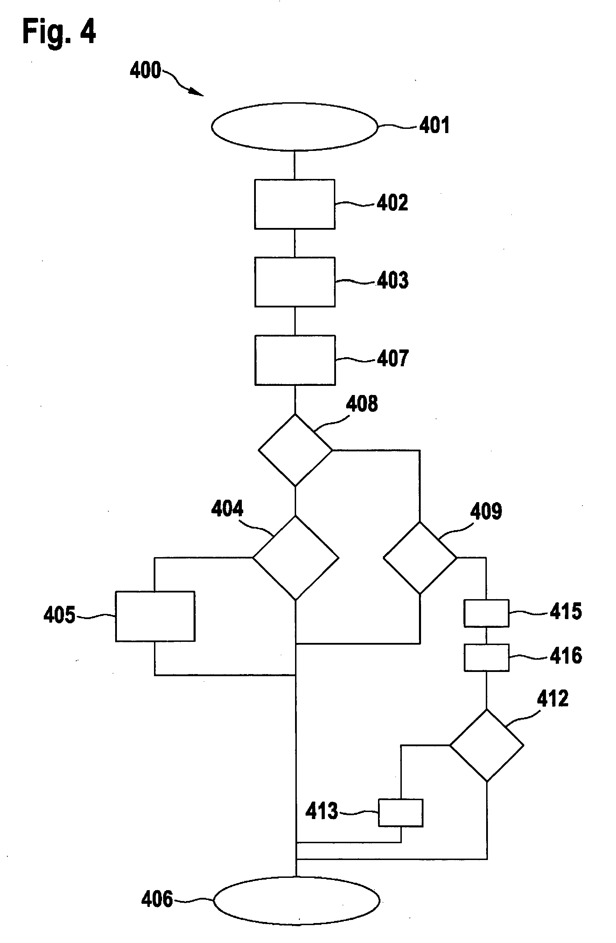

## Patentansprüche

1. Verfahren zur Steuerung eines Antriebsstrangs mit wenigstens einem Antriebsaggregat (102), insbesondere für ein Fahrzeug (101),
wobei ein Sollwert für ein Drehmoment des wenigstens einen Antriebsaggregates (102) vorgebbar ist und ein Istwert des Drehmomentes erfasst wird, und wobei ein erstes Signal erzeugt wird, welches einen sicheren Betrieb des Antriebsstrangs gewährleistet, wenn die Abweichung des Istwertes vom Sollwert grösser als ein vorgebbarer Betrag des Abweichungswerts ist und/oder die Abweichung des Istwertes vom Sollwert länger als ein vorgebbarer Betrag der Abweichungszeitdauer andauert,
**dadurch gekennzeichnet, dass**
bei einem Stillstand des Fahrzeugs (101) in einen sensibleren Modus mit einem kleineren Betrag des Abweichungswerts und/oder der Abweichungszeitdauer gewechselt wird,
wobei, sofern während des Stillstands des Fahrzeugs die Abweichung des Istwertes vom Sollwert grösser als der kleinere Betrag des Abweichungswerts ist und/oder die Abweichung des Istwertes vom Sollwert länger als der kleinere Betrag der Abweichungszeitdauer andauert, das erzeugte erste Signal eine Bremsfunktion wenigstens einer Bremsvorrichtung (105) des Antriebsstrangs aktiviert.

2. Verfahren nach Anspruch 1, **dadurch gekennzeichnet, dass** während der aktivierten Bremsfunktion ein Sollwert für ein Drehmoment eines Antriebaggregates (102) vorgebbar ist und ein Istwert des Drehmomentes erfasst wird, und, wenn die Abweichung des Istwertes vom Sollwert kleiner als der Betrag des Abweichungswerts ist und/oder die Abweichung des Istwertes vom Sollwert kürzer als der Betrag der Abweichungszeitdauer andauert, ein zweites Signal erzeugt wird, welches die Bremsfunktion deaktiviert, und wenn die Abweichung des Istwertes vom Sollwert grösser als der Betrag des Abweichungswerts ist und/oder die Abweichung des Istwertes vom Sollwert länger als der Betrag der Abweichungszeitdauer andauert, ein drittes Signal erzeugt wird, welches sicherstellt, dass das Antriebsaggregat (102) kein Drehmoment mehr abgibt.

3. Verfahren nach Anspruch 1, **dadurch gekennzeichnet, dass** während der aktivierten Bremsfunktion eine Warnmeldung (106) ausgegeben wird und ein Mittel (107) zur Deaktivierung der Bremsfunktion vorgesehen ist, welches ein zweites Signal erzeugt, wobei dieses zweite Signal die Bremsfunktion deaktiviert.

4. Verfahren nach Anspruch 1, **dadurch gekennzeichnet, dass** das erste Signal eine Bremse, eine elektrische Bremse (105), eine Getriebesperre (103) und/oder beide Kupplungen eines Doppelkupplungsgetriebes als die wenigstens eine Bremsvorrichtung (105) des Antriebsstrangs aktiviert.

5. Verfahren nach Anspruch 3, **dadurch gekennzeichnet, dass** die Warnmeldung (106) über den vorliegenden Defekt und die sich daraus ergebenden Gefährdungen informiert.

6. Verfahren nach Anspruch 3, **dadurch gekennzeichnet, dass** als Mittel (107) zur Deaktivierung der Bremsfunktion ein Bedienelement, insbesondere ein Gaspedal, vorgesehen ist.

7. Vorrichtung zur Steuerung eines Antriebsstrangs mit wenigstens einem Antriebsaggregat (102), insbesondere für ein Fahrzeug (101),
wobei ein Sollwert für ein Drehmoment eines Antriebaggregates (102) vorgebbar ist und ein Istwert des Drehmomentes erfasst wird,
und wobei mindestens ein Mittel (108) vorgesehen ist zur Erzeugung eines ersten Signals, welches einen sicheren Betrieb des Antriebsstrangs gewährleistet, wenn die Abweichung des Istwertes vom Sollwert grösser als ein vorgebbarer Betrag des Abweichungswert ist und/oder die Abweichung des Istwertes vom Sollwert länger als ein vorgebbarer Betrag der Abweichungszeitdauer andauert,
**dadurch gekennzeichnet, dass**
bei einem Stillstand des Fahrzeugs (101) in einen sensibleren Modus mit einem kleineren Betrag des Abweichungswerts und/oder der Abweichungszeitdauer wechselbar ist,
wobei, sofern während des Stillstands des Fahrzeugs die Abweichung des Istwertes vom Sollwert grösser als der kleinere Betrag des Abweichungswerts ist und/oder die Abweichung des Istwertes vom Sollwert länger als der kleinere Betrag der Abweichungszeitdauer andauert, mittels des erzeugten ersten Signals eine Bremsfunktion wenigstens einer Bremsvorrichtung (105) des Antriebsstrangs aktivierbar ist.

## Claims

1. Method for controlling a drive train having at least one drive assembly (102), in particular for a vehicle (101),
wherein a setpoint value for a torque of the at least one drive assembly (102) can be predefined and an actual value of the torque is acquired, and wherein a first signal is generated which ensures reliable operation of the drive train if the deviation of the actual value from the setpoint value is greater than a predefinable absolute value of the deviation value and/or the deviation of the actual value from the setpoint value lasts for a longer time than a predefinable absolute value of the deviation time period,
**characterized in that**
when the vehicle (101) is in a stationary state there is a changeover into a more sensitive mode with a relatively low absolute value of the deviation value and/or of the deviation time period,
wherein, if, during the stationary state of the vehicle, the deviation of the actual value from the setpoint value is greater than the relatively low value of the deviation value and/or the deviation of the actual value from the setpoint value lasts for a longer time than the relatively low value of the deviation time period, the generated first signal activates a braking function of at least one brake device (105) of the drive train.

2. Method according to Claim 1, **characterized in that** during the activated braking function a setpoint value for a torque of a drive assembly (102) can be predefined and an actual value of the torque is acquired, and, if the deviation of the actual value from the setpoint value is smaller than the absolute value of the deviation value and/or the deviation of the actual value from the setpoint value lasts for a shorter time than the absolute value of the deviation time period, a second signal is generated which deactivates the braking function, and if the deviation of the actual value from the setpoint value is greater than the absolute value of the deviation value and/or the deviation of the actual value from the setpoint value lasts for a longer time than the absolute value of the deviation time period, a third signal is generated which ensures that the drive assembly (102) no longer outputs any torque.

3. Method according to Claim 1, **characterized in that** during the activated braking function a warning message (106) is output and a means (107) for deactivating the braking function is provided which generates a second signal, wherein this second signal deactivates the braking function.

4. Method according to Claim 1, **characterized in that** the first signal activates a brake, an electric brake (105), a gear lock (103) and/or both clutches of a double clutch mechanism as the at least one brake device (105) of the drive train.

5. Method according to Claim 3, **characterized in that** the warning message (106) provides information about the defect which is present and the resulting hazards.

6. Method according to Claim 3, **characterized in that** an operator control element, in particular an accelerator pedal, is provided as a means (107) for deactivating the braking function.

7. Device for controlling a drive train having at least one drive assembly (102), in particular for a vehicle (101),
wherein a setpoint value for a torque of of a drive assembly (102) can be predefined and an actual value of the torque is acquired,
and wherein at least one means (108) is provided for generating a first signal which ensures reliable operation of the drive train if the deviation of the actual value from the setpoint value is greater than a predefinable absolute value of the deviation value and/or the deviation of the actual value from the setpoint value lasts for a longer time than a predefinable absolute value of the deviation time period,
**characterized in that**
when the vehicle (101) is in a stationary state there is a changeover into a more sensitive mode with a relatively low absolute value of the deviation value and/or of the deviation time period,
wherein, if, during the stationary state of the vehicle, the deviation of the actual value from the setpoint value is greater than the relatively low value of the deviation value and/or the deviation of the actual value from the setpoint value lasts for a longer time than the relatively low value of the deviation time period, the generated first signal activates a braking function of at least one brake device (105) of the drive train.

## Revendications

1. Procédé de commande d'une chaîne cinématique comprenant au moins un groupe de propulsion (102), notamment pour un véhicule (101),
une valeur de consigne pouvant être prédéfinie pour un couple de l'au moins un groupe de propulsion (102) et une valeur réelle du couple étant détectée, et un premier signal étant généré, lequel garantit un fonctionnement sécurisé de la chaîne cinématique lorsque l'écart entre la valeur réelle et la valeur de consigne est supérieur à un montant pouvant être prédéfini de la valeur de l'écart et/ou l'écart entre la valeur réelle et la valeur de consigne dure plus longtemps qu'un montant pouvant être prédéfini de la durée de l'écart,
**caractérisé en ce que**
lors d'un arrêt du véhicule (101), un basculement est effectué dans un mode plus sensible avec un montant plus petit de la valeur de l'écart et/ou de la durée de l'écart,
sous réserve que pendant l'arrêt du véhicule l'écart entre la valeur réelle et la valeur de consigne est supérieur au plus petit montant de la valeur de l'écart et/ou l'écart entre la valeur réelle et la valeur de consigne dure plus longtemps que le plus petit montant de la durée de l'écart, le premier signal généré activant une fonction de freinage d'au moins un dispositif de freinage (105) de la chaîne cinématique.

2. Procédé selon la revendication 1, **caractérisé en ce que** pendant que la fonction de freinage est activée, il est possible de prédéfinir une valeur de consigne pour un couple d'un groupe de propulsion (102) et une valeur réelle du couple est détectée et, lorsque l'écart entre la valeur réelle et la valeur de consigne est inférieur au montant de la valeur de l'écart et/ou l'écart entre la valeur réelle et la valeur de consigne dure moins longtemps que le montant de la durée de l'écart, un deuxième signal est généré, lequel désactive la fonction de freinage et, lorsque l'écart entre la valeur réelle et la valeur de consigne est supérieur au montant de la valeur de l'écart et/ou l'écart entre la valeur réelle et la valeur de consigne dure plus longtemps que le montant de la durée de l'écart, un troisième signal est généré, lequel garantit que le groupe de propulsion (102) ne délivre plus de couple.

3. Procédé selon la revendication 1, **caractérisé en ce que** pendant que la fonction de freinage est activée, un message d'avertissement (106) est délivré et il est prévu des moyens (107) pour désactiver la fonction de freinage, lesquels génèrent un deuxième signal, ce deuxième signal désactivant la fonction de freinage.

4. Procédé selon la revendication 1, **caractérisé en ce que** le premier signal active un frein, un frein électrique (105), un dispositif de blocage de la boîte de vitesses (103) et/ou les deux embrayages d'une boîte de vitesses à double embrayage en tant que l'au moins un dispositif de freinage (105) de la chaîne cinématique.

5. Procédé selon la revendication 3, **caractérisé en ce que** le message d'avertissement. (106) informe sur le défaut en présence et sur les risques qui en résultent.

6. Procédé selon la revendication 3, **caractérisé en ce que** les moyens (107) prévus pour la désactivation de la fonction de freinage sont un élément de commande, notamment une pédale d'accélérateur.

7. Dispositif de commande d'une chaîne cinématique comprenant au moins un groupe de propulsion (102), notamment pour un véhicule (101),
une valeur de consigne pouvant être prédéfinie pour un couple d'un groupe de propulsion (102) et une valeur réelle du couple étant détectée,
et au moins un moyen (108) étant prévu pour générer un premier signal, lequel garantit un fonctionnement sécurisé de la chaîne cinématique lorsque l'écart entre la valeur réelle et la valeur de consigne est supérieur à un montant pouvant être prédéfini de la valeur de l'écart et/ou l'écart entre la valeur réelle et la valeur de consigne dure plus longtemps qu'un montant pouvant être prédéfini de la durée de l'écart, **caractérisé en ce que**
lors d'un arrêt du véhicule (101), un basculement peut être effectué dans un mode plus sensible avec un montant plus petit de la valeur de l'écart et/ou de la durée de l'écart,
sous réserve que pendant l'arrêt du véhicule l'écart entre la valeur réelle et la valeur de consigne est supérieur au plus petit montant de la valeur de l'écart et/ou l'écart entre la valeur réelle et la valeur de consigne dure plus longtemps que le plus petit montant de la durée de l'écart, une fonction de freinage d'au moins un dispositif de freinage (105) de la chaîne cinématique pouvant être activée au moyen du premier signal généré.
